(19) Europäisches Patentamt
European Patent Office
Office européen des brevets

(11) Veröffentlichungsnummer: **0 192 106**
**B1**

(12) **EUROPÄISCHE PATENTSCHRIFT**

(45) Veröffentlichungstag der Patentschrift: **18.01.89**

(51) Int. Cl.⁴: **C 07 C 143/78,** C 08 G 12/40

(21) Anmeldenummer: **86101315.9**

(22) Anmeldetag: **01.02.86**

(54) **Sulfonamidderivate, deren Herstellung und Verwendung.**

(30) Priorität: **20.02.85 DE 3505766**

(43) Veröffentlichungstag der Anmeldung: **27.08.86 Patentblatt 86/35**

(45) Bekanntmachung des Hinweises auf die Patenterteilung: **18.01.89 Patentblatt 89/3**

(84) Benannte Vertragsstaaten: **BE CH DE FR GB IT LI NL SE**

(56) Entgegenhaltungen:
**DE-B-2 608 864**
**GB-A-2 039 901**
**US-A-3 159 593**
**US-A-4 133 843**

**PATENT ABSTRACTS OF JAPAN, unexamined applications, C Sektion, vol. 3, no. 133, 7. November 1979, THE PATENT OFFICE JAPANESE GOVERNMENT, p. 132 C 63**

(73) Patentinhaber: **CASSELLA Aktiengesellschaft, Hanauer Landstrasse 526, D-6000 Frankfurt am Main 61 (DE)**

(72) Erfinder: **Piesch, Steffen, Dr., An der Heide 32, D-6370 Oberursel (DE)**
Erfinder: **Dörries, Peter, Hansa-Allee 80, D-6000 Frankfurt am Main 1 (DE)**

(74) Vertreter: **Urbach, Hans-Georg, Dr. et al, Hanauer Landstrasse 526, D-6000 Frankfurt am Main 61 (DE)**

**EP 0 192 106 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft Sulfonamidderivate und insbesondere deren Mischungen, die durch Kondensation von Sulfonamiden der Formel I mit Formaldehyd und Diolen bzw. Diol-mono-ethern der Formel II

$$R^1\text{-}SO_2\text{-}NH_{2\text{-}m\text{-}p}R^2{}_m(\text{-}CH_2OH)_p \qquad (I)$$

$$H(OCH_2\text{-}\underset{\substack{|\\ R^3}}{CH})_n\text{-}OR^4 \qquad (II)$$

herstellbar sind sowie ihre Verwendung als Modifizierungsmittel für Melaminharze.

Unter Melaminharzen versteht der Fachmann Vorkondensate von Melamin mit Formaldehyd, deren freie Methylolgruppen ganz oder teilweise mit Alkanolen von 1 bis 5 C-Atomen verethert sein können. Diese Vorkondensate haben einen Kondensationsgrad, der so hoch ist, dass die Produkte bei erhöhter Temperatur noch schmelzen oder zumindest erweichen und nach einer gewissen Periode der Fliessfähigkeit unter weiterer Vernetzung völlig aushärten.

Melamin-Formaldehyd-Vorkondensate, deren Methylolgruppen unverethert oder bis zu 10 - 20% verethert sind, werden in der Regel im wässrigen Medium hergestellt und auch in den Handel gebracht. Sie dienen vorzugsweise zum Tränken von Papierbahnen, insbesondere von dekorativen Papierbahnen, die dann zur Herstellung von Laminaten, z.B. dekorativ beschichteten Spanplatten oder Schichtpressstoffen, eingesetzt werden. Verwendet man für die Herstellung derartiger Laminate reine Melamin-Formaldehyd-Vorkondensate, so zeigen die erhaltenen Laminate in der Regel gewisse anwendungstechnische Nachteile. So kann in den meisten Fällen ein ausreichender Glanz der Oberfläche nur dann erhalten werden, wenn eine sehr starke Aushärtung der Oberfläche durchgeführt wird, was wiederum zu Nachteilen bezüglich der Elastizität und der Reissfestigkeit dieser Oberflächen führt. Andere bekannte Nachteile, die sich bei der Verwendung reiner Melamin-Formaldehyd-Kondensationsprodukte ergeben, sind z.B. mangelnde Festigkeit gegen Wasser, Laugen, Wasserdampf oder trockene oder feuchte Hitzebehandlung. Auch Glanz und Gleichmässigkeit der Oberfläche, d.h. der Verlauf des Harzes während des Pressvorganges, können ungenügend sein, es können sich Blasen und Krater bilden, und es kann nach dem Tränkvorgang ein Stauben auftreten.

Zur Vermeidung solcher Nachteile der reinen, gegebenenfalls teilveretherten Melamin-Formaldehyd-Vorkondensate ist es seit langem bekannt, den wässrigen Lösungen dieser Harze während oder nach der Kondensation sogenannte Modifizierungsmittel zuzusetzen. Bekannte Modifizierungsmittel sind z.B. Natriumsulfamat, Polyalkohole wie Sorbit oder Saccharose, Carbonamide wie z.B. Caprolactam, Formamid, Formamidderivate wie z.B. Methylen-bis-formamid, und auch aromatische Sulfonamide, insbesondere Toluolsulfonamid.

Der Zusatz von aromatischen Sulfonamiden, insbesondere Toluolsulfonamid, zu wässrigen Melamin-Tränkharzen führt bei deren Verwendung zur Herstellung von Laminaten zu Oberflächen, die bei guter Elastizität einen sehr hohen Glanz und hervorragende Gleichmässigkeit aufweisen. Sulfonamidmodifizierte Aminotriazinharze sind beispielsweise beschrieben in der US-PS 4 133 843; der Zusatz von Sulfonamid zu Harnstoffharzen ist Gegenstand der Belgischen Patentschrift 869 436 und der DE-PS 2 825 590. Ein Azetoguanamin-sulfonamid-formaldehyd-Kondensationsprodukt ist bekannt aus der Japanischen Offenlegungsschrift 54-112 994, und sulfonamidmodifizierte Phenolformaldehyd-Harze sind Gegenstand der Japanischen Offenlegungsschriften 53-094 589 und 54-112 992. Ein Nachteil der mit Sulfonamiden modifizierten Melaminharze liegt darin, dass sie häufig eine geringere Haltbarkeit aufweisen als die unmodifizierten Produkte, d.h., dass sie früher vergelen und dann nicht mehr für den geplanten Zweck als Tränkharz eingesetzt werden können. Hinzu kommt, dass die Haltbarkeit der mit Sulfonamiden modifizierten Melaminharze einer gewissen Streuung unterliegt, die es schwierig macht, exakte Angaben über die Haltbarkeit zu machen, und damit eine erhebliche Unsicherheit in die Zeit- und Vorratsplanung der Verwender bringt. Ein weiterer Nachteil des Einsatzes von Sulfonamiden als Modifizierungsmittel für Melaminharze liegt auf dem Gebiet der Herstellung dieser Produkte. Hier gelten für die Produktion sehr enge Toleranzen für den Zeitpunkt des Zusatzes dieser Modifizierungsmittel zu den Harzansätzen. Werden diese engen Toleranzen überschritten, so kann es passieren, dass die Haltbarkeit der Harze sehr drastisch veringert wird, oder dass sogar die Ansätze bereits bei der Herstellung vergelen. Auf der anderen Seite kann es passieren, dass die zugesetzten Sulfonamide sich in dem zu modifizierenden Melamin-Formaldehyd-Vorkondensat nicht mehr vollständig auflösen und dann einerseits eine Filtration zur Klärung des Harzes erforderlich ist und andererseits natürlich nicht der volle Glanz bzw. die volle Elastizität auf der mit solchen Harzen erhaltenen Laminat-Oberfläche erzielt werden können.

Es wurde nun gefunden, dass man die Nachteile des Einsatzes von Sulfonamiden als Modifizierungsmittel für Melaminharze vermeiden kann, wenn man für die Modifizierung Sulfonamidderivate und insbesondere deren Mischungen oder Lösungen in Diolen oder Diol-mono-ethern der Formel II einsetzt, die durch Kondensation von Sulfonamiden der Formel I

$$R^1\text{-}SO_2\text{-}NH_{2\text{-}m\text{-}p}R^2{}_m(\text{-}CH_2OH)_p \qquad (I)$$

worin

$R^1$ einen gegebenenfalls substituierten Phenylkern und

$R^2$ Alkyl bedeuten und

m für Null oder 1 und

p für Null, 1 oder 2 steht und

$0 \leqslant (m+p) \leqslant 2$ ist, mit Formaldehyd und Diolen oder Diol-mono-ethern der Formel II

$$H(OCH_2\text{-}\underset{\substack{|\\ R^3}}{CH})_n\text{-}OR^4 \qquad (II)$$

worin

$R^3$ Wasserstoff oder Alkyl und

$R^4$ Wasserstoff oder Alkyl bedeuten und

n für eine Zahl von 2 bis 19, vorzugsweise 2 bis 4, steht, herstellbar sind.

In den Sulfonamiden der Formel I ist der für $R^1$ stehende Phenylkern entweder unsubstituiert oder durch 1 bis 3 Alkylgruppen mit insgesamt bis zu 12 C-Atomen, vorzugsweise mit insgesamt bis zu 4 C-Atomen, oder durch einen Arylrest, insbesondere einen Phenylrest, substituiert.

Bevorzugt für $R^1$ ist unsubstituiertes oder durch eine Alkylgruppe substituiertes Phenyl, wobei die Alkylgruppe 1 bis 4, insbesondere 1 oder 2, C-Atome aufweist.

Eine für $R^2$ stehende Alkylgruppe hat 1 bis 4, vorzugsweise 1 oder 2, C-Atome.

Besonders günstige Sulfonamide der Formel I sind Benzolsulfonamid, o- oder p-Toluolsulfonamid, technische Toluolsulfonamidgemische, N-Methyl-benzolsulfonamid, Xylolosulfonamid, N-Methyltoluolsulfonamid, N-Methylol-benzolsulfonamid, N-Methylol-toluolsulfonamid, N,N-Dimethylol-toluolsulfonamid, N-Methylol-N-methyl-toluolsulfonamid, Diphenyl-sulfonamid.

Eine für $R^3$ stehende Alkylgruppe hat 1 bis 4, vorzugsweise 1 oder 2, C-Atome.

Eine für $R^4$ stehende Alkylgruppe hat 1 bis 18, vorzugsweise 1 bis 4, C-Atome.

Pro Mol des Sulfonamids der Formel I werden 1 bis 4 Mol Formaldehyd und 0,5 bis 4 Mol des Diols bzw. Diolmonoethers miteinander zur Reaktion gebracht.

Wird bei der Durchführung der erfindungsgemässen Kondensation zunächst nur das Sulfonamid mit Formaldehyd umgesetzt, so tritt eine Methylolierung des Sulfonamids ein. Das hierbei entstehende N-Methylol-sulfonamid reagiert dann mit der Diol- bzw. Diolmonoetherkomponente zu den gleichen Endprodukten, die erhalten werden, wenn alle Komponenten aus Anfang an gemischt werden. Entsprechend kann man auch von vorgefertigten N-Methylolsulfonamiden ($p \neq 0$) ausgehen und dabei pro Mol vorhandener N-Methylolgruppe ein Mol Formaldehyd weniger einsetzen.

Bei Einsatz eines Sulfonamids der Formel I, in dem p nicht Null ist, werden demnach pro Mol des Sulfonamids 1-p bis 4-p Mol Formladehyd zum Einsatz gebracht. Selbstverständlich kann der Wert von 1-p nicht negativ werden sondern bedeutet mindestens 0.

Bei Einsatz von Gemischen von Sulfonamiden der Formel I, in denen sich die Mischungskomponenten durch die Werte von m und/oder p unterscheiden, können sich rein rechnerisch für diese Symbole auch Zwischenwerte ergeben. Die Formaldehydmenge kann dann unter Benutzung dieser Zwischenwerte wie oben angegeben berechnet werden.

Soweit der eingesetzte Formaldehyd bei der Kondensation nicht an die Amidgruppe des Sulfonamids gebunden wird, reagiert er weitgehend mit OH-Gruppen der Diol- bzw. Diol-mono-ether-Komponenten zu Acetalen. Er liegt somit in den erfindungsgemässen Kondensationsprodukten nicht mehr in freier Form vor.

Bei der Kondensation kann auch ein Überschuss an Diol- bzw. Diol-mono-ether der Formel II eingesetzt werden, der dann als Lösungsmittel für die Umsetzung dient. Ist dieses Vorgehen und der Einsatz der erfindungsgemässen Produkte tel quel beabsichtigt, so können zweckmässigerweise pro Mol des Sulfonamids der Formel I bis zu 6 Mol des Diols bzw. Diol-mono-ethers eingesetzt werden.

Grundsätzlich ist es auch möglich, die Menge der Diol- bzw. Diol-mono-ether-Komponente noch weiter zu erhöhen. Dies bringt jedoch keine Vorteile mehr, da das erfindungsgemässe Kondensationsprodukt in diesem Fall immer weiter verdünnt wird. Zweckmässigerweise wird im Rahmen der obigen Angaben das Molverhältnis der Komponenten der Formeln I und II und Formaldehyd so gewählt, dass pro Mol Formaldehyd mindestens 2 Mol Protonen aus $-NH_2$ bzw. -NH- und -OH-Gruppen im Kondensationsansatz vorliegen.

Vorzugsweise werden Sulfonamid, Formaldehyd und Diol bzw. Diol-mono-ether im Molverhältnis von 1 : 1 : 1 bis 1 : 4 : 6 miteinander gemischt und der Kondensation unterworfen.

Im Rahmen der oben genannten Grenzen sind die Molverhältnisse von Sulfonamid-Formaldehyd und Diol bzw. Diol-mono-ether unabhängig voneinander variierbar. So können beispielsweise erfindungsgemässe Copolymerisate hergestellt werden durch Kondensation der 3 Ausgangsmaterialien an den Grenzen des Molverhältnisbereichs von Sulfonamid : Formaldehyd : Diol bzw. Diol-mono-ether von 1 : 1 : 0,5 oder 1 : 2 : 2 oder 1 : 4 : 6, aber auch im Zwischenbereich, beispielsweise von 1 : 1,5 : 1 oder 1 : 2 : 1,5 oder 1 : 2,5 : 3,5. Grundsätzlich können für a Mol Sulfonamid alle Werte von 1a bis 4a Mol Formaldehyd und 0,5a bis 6a Mol Diol bzw. Diol-mono-ether mit allen Zwischenwerten eingesetzt werden. Zu beachten ist hierbei lediglich, dass in der Regel nur so viel Diol bzw. Diol-mono-ether in das erfindungsgemässe Produkt eingebaut werden kann, dass alle durch den vorhandenen Formaldehyd gebildeten Methylolgruppen verethert werden, d.h. sind bei der Kondensation x Mol Formaldehyd benutzt worden, wobei $1<x<4$ ist, so werden in der Regel auch maximal x Mol Diol bzw. Diol-mono-ether in das erfindungsgemässe Produkt eingebaut. Eine etwa vorhandene Überschussmenge von Diol bzw. Diol-mono-ether bleibt dabei frei.

Ein eventueller Überschuss von Diol bzw. Diol-mono-ether kann aus dem erfindungsgemässen Produkt in an sich bekannter Weise, z.B. durch Extraktion, zweckmässigerweise aber durch Destillation, entfernt werden. Es ist jedoch nicht erforderlich, diesen Überschuss auf jeden Fall quantitativ zu entfernen, im Gegenteil kann es sogar vorteilhaft sein, gewisse Mengen von Diol bzw. Diol-mono-ether in den erfindungsgemässen Sulfonamidderivaten der Formel I oder ihren Gemischen zu belassen, da sich hieraus zusätzliche anwendungstechnische Vorteile ergeben können.

Die Reaktion zwischen Sulfonamid, Formaldehyd und dem Diol bzw. Diol-mono-ether erfolgt bei Temperaturen zwischen 80 und 250°C, vorzugsweise zwischen 100 bis 200°C, in Gegenwart bekannter wasserabspaltender Katalysatoren, vorzugsweise eines sauren Katalysators. Als saurer Katalysator

eignen sich beispielsweise anorganische oder starke organische Säuren, wie z.B. Salzsäure, Schwefelsäure, Salpetersäure, Phosphorsäure, Ameisensäure, Oxalsäure, Benzolsulfonsäure oder auch sauer reagierende Salze, wie z.B. Mono-alkali-sulfate und insbesondere Amidosulfonsäure.

Zur Beschleunigung und Vervollständigung der Entfernung des Reaktionswassers aus dem Reaktionsgleichgewicht kann, insbesondere gegen Ende der Reaktion, auch im Vakuum gearbeitet werden.

Die Umsetzung der Sulfonamide der Formel I mit dem Formaldehyd und dem Diol oder Diol-monoether der Formel II kann ohne organisches Lösungsmittel oder in Gegenwart eines organischen Lösungsmittels durchgeführt werden. Geeignete organische Lösungsmittel sind beispielsweise inerte Lösungsmittel, wie aliphatische Kohlenwasserstoffe, z.B. Erdölfraktionen, mit einem Siedepunkt von 100 bis 250°C, insbesondere 120 bis 200°C, oder aromatische Kohlenwasserstoffe und Chlorkohlenwasserstoffe mit einem Siedepunkt von 100 bis 250°C, insbesondere 120 bis 200°C. Der Einsatz inerter aromatischer Kohlenwasserstoffe als Lösungsmittel für die Durchführung der Umsetzung ist besonders dann von Vorteil, wenn der Formaldehyd in Form von wässrigem Formaldehyd eingesetzt werden soll, da dann die Entfernung des eingeschleppten Wassers durch azeotrope Destillation begünstigt wird. Besonders vorteilhaft ist die Verwendung eines Überschusses des bei der Umsetzung eingesetzten Diols oder Diol-mono-ethers als organisches Lösungsmittel.

Der Formaldehyd kann in Form einer wässrigen Lösung, vorzugsweise einer über 30%igen Lösung, oder in Form einer Lösung von Formaldehydgas in dem bei der Umsetzung eingesetzten Diol oder Diol-mono-ether oder auch in einem niedrigsiedenden Alkanol eingesetzt werden. Vorzugsweise wird der Formaldehyd jedoch in Form von Paraformaldehyd der Reaktion zugeführt. Werden wässrige Lösungen von Formaldehyd oder Lösungen in niederigsiedenden Alkanolen eingesetzt, so ist dafür zu sorgen, dass das mit der Formaldehydlösung eingebrachte Wasser bzw. der niedere Alkanol aus dem Reaktionsgemisch abdestillieren kann, was insbesondere bei Vorliegen von Wasser durch Zusatz eines organischen Lösungsmittels mit dem Wasser ein azeotropes Gemisch bildet, begünstigt wird.

Besonders bevorzugt sind solche erfindungsgemässen Produkte und Ausführungsformen des Herstellungsverfahrens, in denen sich mehrere der oben genannten bevorzugten Merkmale vereinigen.

Die erfindungsgemäss erhältlichen Sulfonamid-Kondensationsprodukte bestehen aus Sulfonamidderivaten bzw. deren Mischungen der Formel III

$$R^1\text{-}SO_2\text{-}N(R^5)\text{-}\left[CH_2\text{-}(OCH_2\text{-}CH(R^3))_n\text{-}O\right]_q\text{-}R^6 \qquad (III)$$

worin

$R^5$ Wasserstoff, einen Rest $R^2$, Hydroxymethyl oder eine Gruppe der Formel IV

$$-\left[CH_2\text{-}(OCH_2\text{-}CH(R^3))_n\text{-}O\right]_q\text{-}R^6 \qquad (IV)$$

oder V

$$R^1\text{-}SO_2\text{-}N(CH_2\text{-})\text{-}\left[CH_2\text{-}(OCH_2\text{-}CH(R^3))_n\text{-}O\right]_q\text{-}R^6 \qquad (V)$$

oder VI

$$R^1\text{-}SO_2\text{-}N(CH_2\text{-}O\text{-}CH_2\text{-})\text{-}\left[CH_2\text{-}(OCH_2\text{-}CH(R^3))_n\text{-}O\right]_q\text{-}R^6 \qquad (VI)$$

oder VII

$$\text{-}CH_2\text{-}N(R^5)\text{-}SO_2\text{-}R^1 \qquad (VII)$$

$R^6$ einen Rest $R^4$ oder eine Gruppe der Formel VII,
$q = 1, 2$ oder 3
bedeuten und $R^1$, $R^2$, $R^3$, $R^4$ und n die bereits genannten Bedeutungen besitzen, gegebenenfalls in Mischung mit dem Formaldehydacetal der eingesetzten Diol- bzw. Diol-mono-ether-Komponente, und gegebenenfalls überschüssigem Diol bzw. Diol-mono-ether als Lösungsmittel.

Insbesondere bedeutet q 1. Bevorzugt sind Verbindungen und Verbindungsgemische der Formel I mit niedrigem Vernetzungsgrad.

In den Komponenten der Formel III der erfindungsgemässen Gemische liegen die Bedeutungen von q, $R^5$ und $R^6$ in statistischer Verteilung vor, wobei die Mengenanteile von dem Molverhältnis der Ausgangsmaterialien vor der Kondensation abhängen und solche Beträge haben, dass der analytische Mittelwert der Komponenten Sulfonamid, Formaldehyd und Glycol- bzw. Glycol-mono-ether nach der Rückspaltung vorzugsweise im Bereich der Molverhältnisse von 1 : 1 : 0,5 bis 1 : 4 : 4 liegt.

Obwohl auch die aus den erfindungsgemässen Produkten isolierbaren Einzelsubstanzen der obigen Formel III als Modifizierungsmittel für Melaminharze gut geeignet sind und die genannten Vorteile bieten, ist es zweckmässiger, Gemische dieser Substanzen einzusetzen, da diese Gemische flüssig sind und auch nach längerer Lagerung und bei tiefen Temperaturen flüssig bleiben, daher sehr leicht zu applizieren sind und darüber hinaus auch leichter herzustellen sind, da eine Isolierung von Einzelsubstanzen nicht erforderlich ist.

Bei der Herstellung erfindungsgemässer Gemische von Sulfonamidderivaten können bis zu 20% der Sulfonamidkomponente durch Karbonamidgruppen enthaltende bekannte Modifizierungsmittel für Aminoplastharze, wie z.B. Formamid und insbesondere Caprolactam, ersetzt werden.

Die rohen, vorzugsweise tel quel verwendeten, erfindungsgemässen Kondensationsprodukte lösen sich, soweit sie fest sind, in den Harzansätzen weit besser auf als die bisher eingesetzten Sulfonamide. Soweit sie flüssig sind oder als Lösung in überschüssiger Diol- bzw. Diol-mono-ether-Komponente vorliegen, bedarf es nur eines völlig unproblematischen Zumischens. Bevorzugt sind daher solche erfindungsgemässen Produkte, deren Rohschmelzpunkt unter 50°C liegt. Der Zusatz dieser Modifizierungsmittel kann in praktisch jeder Phase der Melaminharz-Herstellung erfolgen, und die so erhaltenen Harze zeigen von Ansatz zu Ansatz eine ausserordentlich geringe Streuung ihrer Eigenschaften, insbesondere ihrer Haltbarkeit. Die Haltbarkeit der so modifizierten Melaminharze liegt höher als die mittlere Haltbarkeit der herkömmlich mit Sulfonamiden modifizierten Harze, und sie besitzen auch bezüglich der Glanz- und Elastizitätseigenschaften der mit ihnen hergestellten Laminate eine sehr hohe und gleichmässige Qualität. Werden die erfindungsgemässen Produkte den Melaminharz-Ansätzen vor oder noch während deren Kondensation zugesetzt, so ergeben sich häufig sogar noch Glanzsteigerungen gegenüber der Verwendung von herkömmlichen Sulfonamiden.

Besonders wertvolle Harze erhält man, wenn die erfindungsgemässen Sulfonamidderivate solchen Melaminharzen zugesetzt werden, deren Molverhältnis von Melamin : Formaldehyd 1 : 1,14 bis 1 : 1,65 beträgt.

Die erfindungsgemässen Sulfonamidderivate oder deren Gemische werden den zu modifizierenden Harzen in einer Menge von 1 bis 20 Gew.-%, vorzugsweise 2 bis 10 Gew.-%, bezogen auf den Festkörperanteil des Harzes, zugesetzt, wobei, wie bereits oben ausgeführt, der Zusatz vor, während oder nach der Kondensation des Harzes erfolgen kann. Besonders vorteilhaft ist der Zusatz vor oder zu Beginn der Kondensation. Diese Massnahme bringt sowohl betriebstechnische Vorteile als auch bei vielen Harzen einen zusätzlichen Qualitätsgewinn. Die mit solchen Harzen hergestellten beschichteten Materialien zeigen häufig einen erheblich erhöhten Glanz.

Die so erhaltenen, erfindungsgemäss modifizierten Harze haben eine sehr gleichmässige Qualität, ausgezeichnete Lagerstabilität und können in üblicher Weise auf allen gängigen Maschinentypen, sowohl auf Mehretagenpressen mit Rückkühlung als auch nach dem Kurztaktverfahren zu Laminaten, insbesondere zu dekorativ beschichteten Holz-Werkstoffen und Schichtpressstoffen, verarbeitet werden. Die Oberflächen der erhaltenen Laminate sind chemisch und mechanisch sehr resistent, haben hohe Elastizität, sind frei von Rissen und zeigen einen sehr hohen und gleichmässigen Glanz.

Die Herstellung von dekorativ beschichteten Holzwerkstoffplatten unter Verwendung der erfindungsgemässen Aminoplaste erfolgt so, dass die Papier- bzw. Gewebebahn mit einem erfindungsgemässen Aminoplasten getränkt und in an sich bekannter Weise weiterverearbeitet wird. Die getränkte und getrocknete Papier- bzw. Gewebebahn wird somit auf die vorbereitete Holzwerkstoffplatte unter Drucken von ca. 10 bis 100 bar und Temperaturen von ca. 120 bis 180°C aufgepresst, wobei für die Pressung vorteilhafterweise Mehretagenpressen verwendet werden. Analog können beim Einsatz von mit Phenolharz imprägnierten Trägerbahnen anstelle der Holzwerkstoffplatten Schichtstoffe hergestellt werden, wobei Pressdrucke von ca. 50 bis 150 bar und Temperaturen von ca. 120 bis 180°C zur Anwendung kommen. Zahlreiche und ausführliche Hinweise auf die Herstellung beschichteter Holzwerkstoffplatten und von Schichtstoffen finden sich in der Literatur, wie z.B. in John F. Blais, Amino Resins, Reinhold Publishing Corp., New York (1959), Seiten 122 bis 138; C.P. Vale, Aminoplastics, London, Cleaver-Hume Press Ltd. (1950), Seiten 209 bis 214; Ullmanns Encyclopädie der techn. Chemie, 4. Auflage, Band 7 (1974), Seiten 417 bis 418.

Vorvernetzte Umsetzungsprodukte von Sulfonamiden mit Formaldehyd sind bereits bekannt und z.B. z.B. gemäss DE-OS 2 260 864 und US-PS 4 079 026 als Pigmentträger, gemäss US-PS 4 113 650 als Bestandteil von Dispergiermitteln und gemäss US-PS 594 156 als Schmelzkleber für die Schuhherstellung eingesetzt worden. Diese bekannten Produkte unterscheiden sich von den erfindungsgemässen Produkten der Formel I dadurch, dass sie nicht mit Diolen oder Diol-mono-ethern verethert sind und dass sie im Gegensatz zu den erfindungsgemässen Produkten einen hohen Grad von Vorvernetzung aufweisen.

Die folgenden Ausführungsbeispiele veranschaulichen die vorliegende Erfindung und können im Rahmen der obigen Beschreibung und der Ansprüche variiert werden.

Das in den Beispielen verwendete ®Granuform ist technischer Paraformaldehyd, 90 Gew.-%, (Rest = Wasser). ®Granuform ist ein eingetragenes Warenzeichen der Fa. Degussa, Frankfurt/Main.

*Beispiel 1*

In einem 1-Liter-Dreihalskolben mit Rührer, Thermometer und absteigendem Kühler werden 170 g technisches Toluolsulfonamid, 300 g Diethylenglycol, 35 g Paraformaldehyd ®Granuform und 1 g Kaliumhydrogensulfat im Verlauf von 30 Minuten unter Rühren auf 120°C erwärmt, wobei eine klare Lösung entsteht. Der Ansatz wird nun bei 120°C und das bei der Kondensation entstehende Wasser abdestillert. Nach 6 Stunden ist die Wasserabspaltung beendet, und das Reaktionsprodukt wird auf Zimmertemperatur abgekühlt.

Man erhält 530 g einer Lösung eines erfindungsgemässen Sulfonamidderivats, welches Sulfonamid, Formaldehyd und Diolkomponente im Molverhältnis 1 : 1 : 1 einkondensiert enthält, in Diethylenglycol.

Ein Produkt mit sehr ähnlichen anwendungstechnischen Eigenschaften wird erhalten, wenn man die oben eingesetzten 300 g Diethylenglycol durch die gleiche Menge Diethylenglycol-mono-methylether ersetzt und anstelle von Kaliumhydrogensulfat 2 g Amidosulfonsäure einsetzt.

*Beispiel 2*

In einem 1-Liter-Dreihalskolben mit Rührer, Thermometer und absteigendem Kühler werden 170 g p-Toluolsulfonamid, 300 g Diethylenglycol, 70 g Paraformaldehyd und 1 g Kaliumhydrogensulfat im Verlauf von 30 Minuten unter Rühren auf 130°C erwärmt, wobei eine klare Lösung entsteht. Der Ansatz wird nun bei 135°C gerührt und das bei der Kondensation entstehende Wasser abdestillert. Nach

5 Stunden ist die Wasserabspaltung beendet, und das Reaktionsprodukt wird auf Zimmertemperatur abgekühlt.

Man erhält 500 g einer Lösung eines erfindungsgemässen Sulfonamidderivats, welches Sulfonamid, Formaldehyd und Diolkomponente im Molverhältnis 1 : 2 : 2 einkondensiert enthält, in Diethylenglycol.

*Beispiel 3*

In einem 2-Liter-Dreihalskolben mit Rührer, Thermometer und absteigendem Kühler werden 500 g p-Toluolsulfonamid, 900 g Triethylenglycol und 180 g ®Granuform im Verlauf von 30 Minuten auf 90°C erwärmt und bei dieser Temperatur gerührt, bis eine klare Lösung entsteht. Danach werden 5 ml Ameisensäure zugetropft und bei 120°C weitergerührt, wobei das bei der Kondensation entstehende Wasser abdestilliert. Nach 2 Stunden wird die Temperatur auf 140°C gesteigert und weitergerührt. Nach 8 Stunden ist die Wasserabspaltung beendet, und das Reaktionsprodukt wird auf Zimmertemperatur abgekühlt.

Man erhält 1480 g einer Lösung eines erfindungsgemässen Sulfonamidderivats, welches Sulfonamid, Formaldehyd und Diolkomponente im Molverhältnis 1 : 2 : 2 einkondensiert enthält, in Triethylenglycol.

*Beispiel 4*

In einem 5-Liter-Dreihalskolben mit Rührer, Thermometer und absteigendem Kühler werden 1900 g technisches Toluolsulfonamid, 3,5 l Triethylenglycol, 670 g Paraformaldehyd und 50 g Kaliumhydrogensulfat im Verlauf von 30 Minuten unter Rühren auf 145°C erwärmt, wobei eine klare Lösung entsteht. Der Ansatz wird nun bei 150°C gerührt und das bei der Kondensation entstehende Wasser abdestillert. Nach 8 Stunden ist die Wasserabspaltung beendet, und das Reaktionsprodukt wird auf Zimmertemperatur abgekühlt.

Man erhält 3077 g einer Lösung eines erfindungsgemässen Sulfonamidderivats, welches Sulfonamid, Formaldehyd und Diolkomponente im Molverhältnis 1 : 2 : 2 einkondensiert enthält, in Triethylenglycol.

*Beispiel 5*

In einem 4-Liter-Dreihalskolben mit Rührer, Thermometer und absteigendem Kühler werden 802 g technisches Toluolsulfonamid, 1415 g Diethylenglycol, 682 ml wässrige 39 gew.%ige Formaldehydlösung und 4,7 g Kaliumhydrogensulfat im Verlauf von 30 Minuten unter Rühren auf 95°C erwärmt, wobei eine klare Lösung entsteht. Der Ansatz wird nun bei 130°C gerührt und das Wasser abdestilliert. Nach 6 Stunden ist die Wasserabspaltung beendet, und das Reaktionsprodukt wird auf Zimmertemperatur abgekühlt.

Man erhält 2285 g einer Lösung eines erfindungsgemässen Sulfonamidderivats, welches Sulfonamid, Formaldehyd und Diolkomponente im Molverhältnis 1 : 2 : 2 einkondensiert enthält, in Diethylenglycol.

*Beispiel 6*

In einem 5-Liter-Dreihalskolben mit Rührer, Thermometer und absteigendem Kühler werden 2,17 l Diethylenglycol, 1695 g Toluolsulfonamid (technisch), 690 g Paraformaldehyd (90%ig, ®Granuform) und 22 g Kaliumhydrogensulfat im Verlauf von 30 Minuten unter Rühren auf 90°C erwärmt, und so lange bei dieser Temperatur gehalten, bis eine klare Lösung entsteht. Der Ansatz wird nun bei 140°C gerührt und das bei der Kondensation entstehende Wasser zunächst 12 Stunden offen, dann noch 12 Stunden im Wasserstrahlvakuum (15 mbar) abdestilliert. Danach ist die Wasserabspaltung beendet, und das Reaktionsprodukt wird auf Zimmertemperatur abgekühlt.

Man erhält 4460 g einer 94,9 gew.%igen Lösung eines erfindungsgemässen Sulfonamidderivats, welches Sulfonamid, Formaldehyd und Diolkomponente im Molverhältnis 1 : 2 : 2 einkondensiert enthält, in Diethylenglycol.

*Beispiel 7*

In einem 3-Liter-Dreihalskolben mit Rührer, Thermometer und absteigendem Kühler werden 760 g Toluolsulfonamid (90 gew.%ig, Rest = Wasser), 840 g Diethylenglycol, 200 g Polyethylenglycol, Molgewicht 400, 5 g ®Emulsogen EL (handelsübliches Emulgiermittel, ®Emulsogen ist ein eingetragenes Warenzeichen der Firma Hoechst AG, Frankfurt/Main), 265 g Paraformaldehyd und 15 g Kaliumhydrogensulfat im Verlauf von 50 Minuten unter Rühren auf 100°C erwärmt, wobei eine klare Lösung entsteht. Der Ansatz wird nun bei 140°C gerührt und das bei der Kondensation entstehende Wasser 12 Stunden lang offen, dann noch 3 Stunden lang im Wasserstrahlvakuum (15 mbar) abdestilliert. Danach ist die Wasserabspaltung beendet, und das Reaktionsprodukt wird auf Zimmertemperatur abgekühlt.

Man erhält 1830 g eines erfindungsgemässen Sulfonamidderivats, welches Sulfonamid, Formaldehyd und Diolkomponente im Molverhältnis 1 : 2 : 2 einkondensiert enthält.

*Beispiel 8*

In einem 2-Liter-Dreihalskolben mit Rührer, Thermometer und absteigendem Kühler werden 285 g Toluolsulfonamid, 600 g Polyglycol, Molgewicht 200, 97,5 g Paraformaldehyd und 3 g Kaliumhydrogensulfat im Verlauf von 20 Minuten unter Rühren auf 100°C erwärmt und 1 Stunde bei dieser Temperatur gehalten, wobei eine klare Lösung entsteht. Der Ansatz wird nun 2 Stunden bei 130°C und 2 Stunden bei 145°C gerührt und das bei der Kondensation entstehende Wasser abdestillert. Danach ist die Wasserabspaltung beendet, und das Reaktionsprodukt wird auf Zimmertemperatur abgekühlt.

Man erhält 920 g einers erfindungsgemässen Sulfonamidderivats, welches Sulfonamid, Formaldehyd und Diolkomponente im Molverhältnis 1 : 2 : 2 einkondensiert enthält.

*Beispiel 9*

In einem 2-Liter-Dreihalskolben mit Rührer, Thermometer und absteigendem Kühler werden 500 g technisches Toluolsulfonamid (techn. 90 gew.%ig), 800 g Dipropylenglycol, 90 g Paraformaldehyd (90 gew.%ig) und 10 g Amidosulfonsäure im Verlauf von 30 Minuten unter Rühren auf 100°C erwärmt, wobei eine klare Lösung entsteht. Der Ansatz wird nun bei 130°C gerührt und das bei der Kondensation entstehende Wasser zunächst offen, dann im Wasserstrahlvakuum (15 mbar) abdestilliert. Nach 6 Stunden ist die Wasserabspaltung beendet, und das Reaktionsprodukt wird auf Zimmertemperatur abgekühlt.

Man erhält 1190 g einer 81 gew.%igen Lösung eines erfindungsgemässen Sulfonamidderivats, welches Sulfonamid, Formaldehyd und Diolkomponente im Molverhältnis 1 : 1 : 1 einkondensiert enthält, in Dipropylenglycol.

*Beispiel 10*

In einem 1-Liter-Dreihalskolben mit Rührer, Thermometer und absteigendem Kühler werden 190 g Toluolsulfonamid, 400 g eines Diols der Formel

$HO\text{-}CH_2CH(C_3H_7)\text{-}O\text{-}CH_2\text{-}CH(C_3H_7)\text{-}OH$

65 g Paraformaldehyd und 1 g Kaliumhydrogensulfat im Verlauf von 30 Minuten unter Rühren auf 135°C erwärmt, wobei eine klare Lösung entsteht. Der Ansatz wird nun bei 135-140°C gerührt und das bei der Kondensation entstehende Wasser abdestillert. Nach 12 Stunden ist die Wasserabspaltung beendet, und das Reaktionsprodukt wird auf Zimmertemperatur abgekühlt.

Man erhält 574 g eines erfindungsgemässen Sulfonamidderivats, welches Sulfonamid, Formaldehyd und Diolkomponente im Molverhältnis 1 : 2 : 2 einkondensiert enthält.

*Beispiel 11*

In einem 2-Liter-Dreihalskolben mit Rührer, Thermometer und absteigendem Kühler werden 500 g Toluolsulfonamid, 200 ml Diethylenglycol, 45 g Paraformaldehyd und 10 g Kaliumhydrogensulfat im Verlauf von 30 Minuten unter Rühren auf 140°C erwärmt, wobei eine klare Lösung entsteht. Der Ansatz wird nun 2 Stunden bei 140°C gerührt und das bei der Kondensation entstehende Wasser abdestillert. Dann wird er auf 90°C abgekühlt, weitere 200 ml Diethylenglycol und 90 g Paraformaldehyd zugefügt und wieder auf 140°C erhitzt. Nach einer weiteren Stunde ist die Wasserabspaltung beendet, und das Reaktionsprodukt wird auf Zimmertemperatur abgekühlt.

Man erhält 972 g einer 94,5 gew.%igen Lösung eines erfindungsgemässen Sulfonamidderivats, welches Sulfonamid, Formaldehyd und Diolkomponente im Molverhältnis 2 : 3 : 2 einkondensiert enthält, in Diethylenglycol.

*Beispiel 12*

171 g eines technischen Gemisches aus o- und p-Toluolsulfonamid, 45 g Formamid, 55 g Caprolactam, 650 g Diethylenglycol, 200 g ®Granuform, 20 g Amidosulfosäure werden 1 Stunde bei 100°C gerührt, dann wird auf eine Innentemperatur von 135°C geheizt und unter Stickstoff das Reaktionswasser (zuletzt mit leichtem Vakuum) abdestilliert. Wenn 125 ml Wasser abdestilliert sind, wird der Ansatz abgekühlt und abgefüllt. Man erhält ein praktisch farbloses Öl mit folgenden Kenndaten:

$V_{H_2O}$ 1 : 0.9

Dichte: 1,178.

Das Produkt kann in dieser Form als Modifizierungsmittel verwendet werden oder nachdem man die Amidosulfosäure mit 8 g NaOH neutralisiert hat.

Ein ähnliches Ergebnis erhält man, wenn im obigen Ansatz das Formamid weggelassen und die Caprolactammenge auf 110 g erhöht wird.

In Analogie zu den Angaben in den Beispielen 1 bis 12 lassen sich auch die erfindungsgemässen Sulfonamidderivate der Tabelle 1 herstellen, die als Modifizierungsmittel für Melaminharze sehr gut geeignet sind.

Tabelle 1

| Beispiel Nr. | Sulfonamid der Formel I (Mol) Carbonamid (Mol) | Formaldehyd: Lösungsmittel und % Gehalt der Lösung (Mol) | Diol bzw. Diol-mono-ether | Katalysator | Reaktionstemperatur |
|---|---|---|---|---|---|
| I | 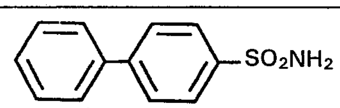 (1 mol) | ®Granuform (3 mol) | Triglycol (5 mol) | 10 g $H_2NSO_3H$ | 135°C |
| II | Biphenyl-sulfonamid (0,1 mol) +TSA* (,9 mol) | ®Granuform (2,5 mol) | Triglycol (1,5 mol) + Diglycol (1,5 mol) | 10 g $H_2NSO_3H$ | 140°C |
| III | Xylol-mono-sulfonamid (techn. Gemisch) (1 mol) | ®Granuform (2,5 mol) | Triglycol (1,5 mol) + Diglycol (1,5 mol) | 10 g $H_2NSO_3H$ | 140°C |
| IV | Mesitylen-mono-sulfonamid (1 mol) | ®Granuform (3 mol) | Triglycol (4 mol) | 15 g $H_2NSO_3H$ | 140°C |

* TSA = technisches Toluolsulfonamid Diglycol = Diethylenglycol Triglycol = Triethylenglycol

Die erheblichen Unterschiede in der Haltbarkeit von Harzen, deren Toluolsulfonamid vor der Kondensation, nach der Kondensation bei 60°C und nach dem Abkühlen auf 25°C zugesetzt worden ist, sowie die erheblich günstigeren Haltbarkeitswerte, die sich bei Ersatz des Toluolsulfonamids durch das erfindungsgemässe Produkt des Beispiels 1 ergeben, werden durch die folgenden Ausführungsbeispiele 13 bis 15 sowie 13a bis 15a veranschaulicht.

*Beispiele 13 und 13a*

In zwei Dreihalskolben von 2 Liter Inhalt werden unter Rühren je 252 g Melamin, 260 g einer 39 gew.%igen wässrigen Formaldehydlösung, 50 g Methanol und 0,5 g Pottasche innerhalb von 30 bis 40 Minuten auf 90°C erhitzt und bei dieser Temperatur bis zu einer Wasserverdünnbarkeit von 1 : 2,2 kondensiert (Dauer 4 Stunden).

Sodann werden bei 90°C sofort in den Ansatz 13 10 g technisches Toluolsulfonamid und in den Ansatz 13a 10 g des erfindungsgemässen Sulfonamidgemisches des Beispiels 1 eingetragen und die Ansätze unter Rühren im Verlauf von 1,5 Stunden auf 25°C abgekühlt.

Durch Zusatz von Wasser werden die erhaltenen Harze auf einen Festkörpergehalt von 60 Gew.-% eingestellt und in Flaschen gefüllt.

*Beispiele 14 und 14a*

Zwei Harzansätze wie in den Beispielen 13 und 13a beschrieben, werden bis zu einer Wasserverdünnbarkeit von 1 : 2,2 kondensiert.

Dann werden beide Ansätze unter Rühren so abgekühlt, dass sie im Verlauf von 1,5 Stunden 25°C erreichen. Sobald die Ansätze 65°C erreichen, wird in den Ansatz 14 10 g technisches Toluolsulfonamid und in den Ansatz 14a 10 g des erfindungsgemässen Sulfonamidgemisches des Beispiels 1 eingetragen.

Durch Zusatz von Wasser werden die erhaltenen Harze auf einen Festkörpergehalt von 60 Gew.-% eingestellt und in Flaschen gefüllt.

*Beispiele 15 und 15a*

Zwei Harzansätze wie in den Beispielen 13 und 13a beschrieben, werden bis zu einer Wasserverdünnbarkeit von 1 : 2,2 kondensiert.

Dann werden beide Ansätze unter Rühren so abgekühlt, dass sie im Verlauf von 1,5 Stunden 25°C erreichen. Sobald die Ansätze 35°C erreichen, wird in den Ansatz 15 10 g technisches Toluolsulfonamid und in den Ansatz 15a 10 g des erfindungsgemässen Sulfonamidgemisches des Beispiels 1 eingetragen.

Durch Zusatz von Wasser werden die erhaltenen Harze auf einen Festkörpergehalt von 60 Gew.-% eingestellt, in Flaschen gefüllt und die Lagerfähigkeit bestimmt.

In der folgenden Tabelle 2 sind die Zeiten bis zur ersten Trübung bzw. bis zum Beginn der Vergelung für die Harze 13 bis 15 und 13a bis 15a angegeben. (Haltbarkeitsprüfung).

Tabelle 2

| Harz gemäss Beispiel Nr. | Mittlere Lagerstabilität (Tage) |
|---|---|
| 13 | nach 3 Tagen deutliche Trübung |
| 13a | nach 14 Tagen leichte Trübung |
| 14 | nach 10 Tagen deutliche Trübung |
| 14a | nach 21 Tagen leichte Trübung |
| 15 | sofort nach Zusatz deutliche Trübung |
| 15a | nach 14 Tagen leichte Trübung |

*Beispiele 13b, 14b und 15b*

Werden den Ansätzen 13a, 14a und 15a anstelle von je 10 g des erfindungsgemässen Sulfonamidgemisches je 30 g dieses Produkts zugesetzt, so ergeben sich folgende Lagerstabilitäten:

13b: 10 Tage; 14b: 18 Tage; 15b: 12 Tage.

*Beispiele 16 und 16a*

In zwei Dreihalskolben von je 2 Liter Inhalt werden unter Rühren je 252 g Melamin, 225 g einer 39 gew.%igen wässrigen Formaldehydlösung und 13,6 g Diethylenglycol gemischt und durch Zusatz von 10 gew.%iger wässriger KOH-Lösung (ca. 3-4 ml) auf einen pH-Wert von 9,6 bis 9,9 eingestellt.

In den Ansatz 16 wird dann eine Mischung aus 11 g technischem Toluolsulfonamid und 14 g Diethylenglycol, und in den Ansatz 16a werden 25 g des erfindungsgemässen Sulfonamidgemisches des Beispiels 6 eingerührt.

Dann werden beide Ansätze innerhalb von 30 - 40 Minuten auf 90 - 95°C erwärmt, bei dieser Temperatur bis zu einer Wasserverdünnbarkeit von 1 : 0,8 kondensiert (Dauer ca. 4 Stunden) und anschliessend unter Rühren im Verlauf von 1,5 Stunden auf 25°C abgekühlt.

Durch Zusatz von Wasser werden die erhaltenen Harze auf einen Festkörpergehalt von 60 Gew.-% eingestellt und in Flaschen gefüllt.

*Beispiele 17 und 17a*

In zwei Dreihalskolben von je 2 Liter Inhalt werden unter Rühren je 252 g Melamin, 225 g einer 39 gew.%igen wässrigen Formaldehydlösung und 13,6 g Diethylenglycol gemischt und durch Zusatz von 10 gew.%iger wässriger KOH-Lösung (ca. 3-4 ml) auf einen pH-Wert von 9,6 bis 9,9 eingestellt.

Dann werden beide Ansätze innerhalb von 30 - 40 Minuten auf 90 - 95°C erwärmt, bei dieser Temperatur bis zu einer Wasserverdünnbarkeit von 1 : 0,8 kondensiert (Dauer ca. 4 Stunden) und anschliessend unter Rühren im Verlauf von 1,5 Stunden auf 25°C abgekühlt.

Sobald die Ansätze 65°C erreichen, wird in den Ansatz 17 eine Mischung aus 11 g technischen Toluolsulfonamid und 14 g Diethylenglycol und in den Ansatz 17a 25 g des erfindungsgemässen Sulfonamidgemisches des Beispiels 6 eingetragen.

Durch Zusatz von Wasser werden die erhaltenen Harze auf einen Festkörpergehalt von 60 Gew.-% eingestellt und in Flaschen gefüllt.

*Beispiele 18 und 18a*

Zwei Harzansätze wie in den Beispielen 17 und 17a beschrieben, werden bis zu einer Wasserverdünnbarkeit von 1 : 0,8 kondensiert.

Dann werden beide Ansätze unter Rühren so abgekühlt, dass sie im Verlauf von 1,5 Stunden 25°C erreichen. Sobald die Ansätze 35°C erreichen, werden in den Ansatz 18 eine Mischung aus 11 g technischem Toluolsulfonamid und 14 g Diethylenglycol und in den Ansatz 18a 25 g des erfindungsgemässen Sulfonamidgemisches des Beispiels 6 eingetragen. Während der Ansatz 18a einwandfrei klar ist, weist der Ansatz 18 eine erhebliche Trübung durch ungelöstes Toluolsulfonamid auf.

Durch Zusatz von Wasser werden die erhaltenen Harze auf einen Festkörpergehalt von 60 Gew.-% eingestellt und in Flaschen gefüllt.

*Anwendungsbeispiel*

Die modifizierten Harze der Beispiele 16 bis 18 und 16a bis 18a werden wie folgt zur Herstellung eines dekorativ beschichteten Holzwerkstoffs eingesetzt:

Zunächst werden je 50 g der Harzlösungen für die Haltbarkeitsprüfung abgefüllt.

Den verbleibenden Harzlösungen wurde je 0,9 Gew.-% Morpholinsalz der p-Toluolsulfonsäure als Härter (dieser Härter wird auch bei den folgenden Beispielen verwendet), bezogen auf Festharz, zugesetzt und verrührt. Danach wurden die Harze durch Zusatz von Wasser auf die Tränkkonzentration von 52% eingestellt. Hierbei traten bei dem Harz 16 sofort starke Harzausflockungen aus, die auch nach längerem Rühren zu einer bleibenden Trübung und Inhomogenität des Harzes führten. In den einwandfreien Tränkflotten wurden je ein 80 g/m² schweres weisses Dekorpapier auf ein Endgewicht von ca. 200 g/m² imprägniert und auf einen Restfeuchtegehalt von 5,5 bis 7 Gew.-% (5 Minuten/160°C) getrocknet.

(die Angabe 5 Minuten/160°C besagt, dass zur Bestimmung des Restfeuchtegehaltes eine Probe 5 Minuten lang bei 160°C gelagert und aus dem dabei erlittenen Gewichtsverlust der Restfeuchtegehalt berechnet wurde.)

Danach wurde jedes der getränkten und getrockneten Papiere in 3 Teile geteilt und jeweils ein Teil für die folgenden 3 Pressversuche eingesetzt.

A) Je eines der mit den Harzen 17 und 16a bis 18a getränkten Papiere wurde anschliessend auf einer Kurztaktpresse mit einem Druck von 22 bar bei einer Temperatur von 160°C auf Holzspanplatten aufgepresst. Die Standzeit der Presse betrug 60 Sekunden. Die Oberflächen der Beschichtungen wurden wie üblich im Hinblick auf Glanz, Gleichmässigkeit und Rissbeständigkeit bei Temperung 20 Stunden bei 140°C ausgewertet.

Die erhaltenen Befunde sind in der folgenden Tabelle 3 zusammengefasst.

Tabelle 3

| Harz gemäss Beispiel Nr. | Glanz (Reflektionswerte bei 60°C Einstrahlungswinkel) | Gleichmässigkeit | Rissbeständigkeit | Mittlere Lagerstabilität (Tage) |
|---|---|---|---|---|
| 16 | Wasserverdünnbarkeit des Harzes völlig ungenügend | | | |
| 16a | 95% | sehr gut | einwandfrei | nach 14 Tagen noch klar |
| 17 | 80% | gut | Mikrorisse | nach 8 Tagen deutliche Trübung |
| 17a | 85% | gut | einwandfrei | nach 9 Tagen leichte Trübung |
| 18 | Harzansatz inhomogen, trübe | | | |
| 18a | 85% | gut | einwandfrei | nach 9 Tagen leichte Trübung |

Unter Verwendung der Harze der Beispiele 17 und 17a wurden nach Zusatz von 0,9% eines handelsüblichen Härtungsbeschleunigers ein Holzmuster-Dekorpapier (80 g/m²) auf eine Harzaufnahme von 58% und ein Natronkraftpapier (150 g/m²) auf eine Harzaufnahme von 53% getränkt. Die getränkten Papiere wurden auf eine Restfeuchte von 6,5% getrocknet und dann mit folgendem Aufbau

beharztes Dekorpapier
2 beharzte Natronkraftpapiere
1 Möbelpergament (unbeharzt)

in einer Doppelbandpresse mit 7 m/min Vorschubgeschwindigkeit bei 160 - 162°C unter einem Druck von 18 bar verpresst.

Das unter Verwendung des Harzes 17a hergestellte Endloslaminat weist im Vergleich zu dem unter Einsatz des Harzes 17 hergestellten deutlich bessere Postformingeigenschaften (Nachverformbarkeit) auf.

**Patentansprüche**

1. Sulfonamidderivate deren Gemische und Löungen der allgemeinen Formel III

$$R^1\text{-}SO_2\text{-}\underset{R^5}{\underset{|}{N}}\text{-}\left[CH_2\text{-}(OCH_2\text{-}\underset{R^3}{\underset{|}{CH}})_n\text{-}O\right]_q\text{-}R^6 \qquad (III)$$

worin

$R^1$ gegebenenfalls substituiertes Phenyl,
$R^3$ Wasserstoff oder Alkyl,
$R^5$ Wasserstoff, Alkyl, Hydroxymethyl oder eine Gruppe der Formel IV

$$-\left[CH_2-(OCH_2-\underset{R^3}{\underset{|}{CH}})_n-O\right]_q-R^6 \quad (IV)$$

oder V

$$R^1-SO_2-\overset{\overset{|}{CH_2}}{\overset{|}{N}}-\left[CH_2-(OCH_2-\underset{R^3}{\underset{|}{CH}})_n-O\right]_q-R^6 \quad (V)$$

oder VI

$$R^1-SO_2-\overset{\overset{O-CH_2-}{\overset{|}{CH_2}}}{\overset{|}{N}}-\left[CH_2-(OCH_2-\underset{R^3}{\underset{|}{CH}})_n-O\right]_q-R^6 \quad (VI)$$

oder VII

$$-CH_2-\underset{R^5}{\underset{|}{N}}-SO_2-R^1 \quad (VII)$$

$R^6$ Wasserstoff, Alkyl oder einen Rest der Formel VII,
$n$ = eine Zahl von 2 bis 19,
$q$ = 1, 2 oder 3
bedeuten.

2. Sulfonamidderivate, deren Mischungen oder Lösungen in Diolen oder Diol-mono-ethern der Formel II herstellbar durch Kondensation von Sulfonamiden der Formel I

$$R^1-SO_2-NH_{2-m-p}R^2_m(-CH_2OH)_p \quad (I)$$

worin
$R^1$ einen gegebenenfalls substituierten Phenylkern und
$R^2$ Alkyl bedeuten und
m für Null oder 1 und
p für Null, 1 oder 2 steht und
$0 \leqslant (m+p) \leqslant 2$ ist, mit Formaldehyd und Diolen oder Diol-mono-ethern der Formel II

$$H(OCH_2-\underset{R^3}{\underset{|}{CH}})_n-OR^4 \quad (II)$$

worin
$R^3$ Wasserstoff oder Alkyl und
$R^4$ Wasserstoff oder Alkyl bedeuten und
n für eine Zahl von 2 bis 19 steht, im Molverhältnis Sulfonamid : Formaldehyd : Diol bzw. Diol-monoether von 1 : (1-p) : 0,5 bis 1 : (4-p) : 6.

3. Sulfonamidderivate gemäss den Ansprüchen 1 und 2, dadurch gekennzeichnet, dass $R^1$ einen Phenylkern bedeutet, der entweder unsubstituiert oder durch 1 bis 3 Alkylgruppen mit insgesamt bis zu 12 C-Atomen. vorzugsweise mit insgesamt bis zu 4 C-Atomen, oder durch einen weiteren Arylrest, insbesondere einen Phenylrest, substituiert ist,
$R^2$ eine Alkylgruppe mit 1 bis 4 C-Atomen,
$R^3$ eine Alkylgruppe mit 1 bis 4 C-Atomen und $R^4$ bzw. $R^6$ eine Alkylgruppe mit 1 bis 18 C-Atomen bedeutet und eine für $R^5$ stehende Alkylgruppe mit $R^2$ identisch ist.

4. Sulfonamidderivate gemäss den Ansprüchen 1 bis 3, dadurch gekennzeichnet, dass $R^4$ bzw. $R^6$ eine Alkylgruppe mit 1 bis 4 C-Atomen ist.

5. Sulfonamidderivate gemäss den Ansprüchen 1 bis 4, dadurch gekennzeichnet, dass n für eine Zahl von 2 bis 4 und/oder q für die Zahl 1 steht.

6. Verfahren zur Herstellung der Sulfonamidderivate der Ansprüche 1 bis 5, deren Mischungen oder Lösungen in Diolen oder Diol-mono-ethern der Formel II, dadurch gekennzeichnet, dass man Sulfonamide der Formel I

$$R^1-SO_2-NH_{2-m-p}R^2_m(-CH_2OH)_p \quad (I)$$

worin
$R^1$ einen gegebenenfalls substituierten Phenylkern und
$R^2$ Alkyl bedeuten und
m für Null oder 1 und
p für Null, 1 oder 2 steht und
$0 \leqslant (m+p) \leqslant 2$ ist, mit Formaldehyd und Diolen oder Diol-mono-ethern der Formel II

$$H(OCH_2-\underset{R^3}{\underset{|}{CH}})_n-OR^4 \quad (II)$$

worin
$R^3$ Wasserstoff oder Alkyl und
$R^4$ Wasserstoff oder Alkyl bedeuten und
worin
n für eine Zahl von 2 bis 19 steht, im Molverhältnis Sulfonamid : Formaldehyd : Diol bzw. Diol-monoether von 1 : (1-p) : 0,5 bis 1 : (4-p) : 6 in Gegenwart eines wasserabspaltenden Katalysators bei Temperaturen von 80 bis 250°C, gegebenenfalls in Gegenwart eines inerten organischen Lösungsmittels, miteinander kondensiert.

7. Verfahren gemäss Anspruch 6, dadurch gekennzeichnet, dass man als wasserabspaltenden Katalysator eine anorganische oder starke organische Säure, insbesondere Amidosulfonsäure, oder ein sauer reagierendes Salz einsetzt und bei 100 bis 200°C kondensiert.

8. Verfahren gemäss den Ansprüchen 6 und 7, dadurch gekennzeichnet, dass man den Formaldehyd in Form einer mindestens 30 gew.%igen wässrigen Lösung oder in Form von Paraformaldehyd einsetzt.

9. Verwendung der Sulfonamidderivate der Ansprüche 1 bis 5 als Modifizierungsmittel für Melaminharze.

10. Verwendung der Sulfonamidderivate der Ansprüche 1 bis 5 als Modifizierungsmittel für Melaminharze mit einem Molverhältnis von Melamin : Formaldehyd von 1 : 1,14 bis 1 : 1,65.

**Claims**

1. Sulphonamide derivatives, their mixtures and solutions thereof, of the general formula III

$$R^1\text{-}SO_2\text{-}N(R^5)\text{-}[CH_2\text{-}(OCH_2\text{-}CH(R^3))_n\text{-}O]_q\text{-}R^6 \quad (III)$$

wherein
$R^1$ denotes optionally substituted phenyl,
$R^3$ denotes hydrogen or alkyl,
$R^5$ denotes hydrogen, alkyl, hydroxymethyl or a group of the formulae IV

$$\text{-}[CH_2\text{-}(OCH_2\text{-}CH(R^3))_n\text{-}O]_q\text{-}R^6 \quad (IV)$$

or V

$$\text{-}CH_2\text{-}N(SO_2\text{-}R^1)\text{-}[CH_2\text{-}(OCH_2\text{-}CH(R^3))_n\text{-}O]_q\text{-}R^6 \quad (V)$$

or VI

$$\text{-}O\text{-}CH_2\text{-}CH_2\text{-}N(SO_2\text{-}R^1)\text{-}[CH_2\text{-}(OCH_2\text{-}CH(R^3))_n\text{-}O]_q\text{-}R^6 \quad (VI)$$

or VII

$$\text{-}CH_2\text{-}N(R^5)\text{-}SO_2\text{-}R^1 \quad (VII)$$

wherein
$R^6$ is hydrogen or a radical of formula VII,
n is a number from 2 to 19 and q is 1, 2 or 3.

2. Sulphonamide derivatives or their mixtures or solutions in diols or diol monoethers of the formula II, which can be prepared by condensation of sulphonamides of the formula I

$$R^1\text{-}SO_2\text{-}NH_{2\text{-}m\text{-}p}R^2_m(\text{-}CH_2OH)_p \quad (I)$$

wherein
$R^1$ denotes an optionally substituted phenyl nucleus,
$R^2$ denotes alkyl,
m represents zero or 1,
p represents zero, 1 or 2 and
$0 \leqslant (m+p) \leqslant 2$, with formaldehyde and diols or diol monoethers of the formula II

$$H(OCH_2\text{-}CH(R^3))_n\text{-}OR^4 \quad (II)$$

wherein
$R^3$ denotes hydrogen or alkyl,
$R^4$ denotes hydrogen or alkyl and
n represents a number from 2 to 19, in a molar ratio of sulphonamide : formaldehyde : diol or diol monoether of 1 : (1-p) : 0.5 to 1 : (4-p) : 6.

3. Sulphonamide derivatives according to claims 1 and 2, characterised in that $R^1$ denotes a phenyl nucleus, which is either unsubstituted or substituted by 1 to 3 alkyl groups with a total of up to 12 C atoms, preferably with a total of up to 4 C atoms, or by another aryl radical, in particular a phenyl radical, $R^2$ denotes an alkyl group with 1 to 4 C atoms, $R^3$ denotes an alkyl group with 1 to 4 C atoms and $R^4$ and $R^6$ denote an alkyl group with 1 to 18 C atoms and an alkyl group standing for $R^5$ is identical with $R^2$.

4. Sulphonamide derivatives according to claims 1 to 3, characterised in that $R^4$ and $R^6$ each is an alkyl group with 1 to 4 C atoms.

5. Sulphonamide derivatives according to claims 1 to 4, characterised in that n represents a number from 2 to 4 and/or q is the number 1.

6. Process for the preparation of the sulphonamide derivatives according to claims 1 to 5 or their mixtures or solutions in diols or diol monoethers of the formula II, characterised in that sulphonamides of the formula I

$$R^1\text{-}SO_2\text{-}NH_{2\text{-}m\text{-}p}R^2_m(\text{-}CH_2OH)_p \quad (I)$$

wherein
$R^1$ denotes an optionally substituted phenyl nucleus,
$R^2$ denotes alkyl,
m represents zero or 1,
p represents zero, 1 or 2 and
$0 \leqslant (m+p) \leqslant 2$, with formaldehyde and diols or diol monoethers of the formula II

$$H(OCH_2\text{-}CH(R^3))_n\text{-}OR^4 \quad (II)$$

wherein
$R^3$ denotes hydrogen or alkyl,
$R^4$ denotes hydrogen or alkyl and
n represents a number from 2 to 19, are subjected to a condensation reaction with one another in a molar ratio of sulphonamide : formaldehyde : diol or diol monoether of 1 : (1-p) : 0.5 to 1 : (4-p) : 6 in the presence of a catalyst which splits off water, at temperatures of 80 to 250°C, if appropriate in the presence of an inert organic solvent.

7. Process according to claim 6, characterised in that an inorganic or strong organic acid, in particular amidosulphonic acid or a salt having an acidic reaction is employed as the catalyst which splits off water and the condensation is carried out at 100 to 200°C.

8. Process according to claims 6 and 7, characterised in that the formaldehyde is employed in the form of an at least 30% strength by weight aqueous solution or in the form of paraformaldehyde.

9. Use of the sulphonamide derivatives of claims 1 to 5 as modifying agents for melamine resins.

10. Use of the sulphonamide derivatives of claims 1 to 5 as modifying agents for melamine resins with a molar ratio of melamine : formaldehyde of 1 : 1.14 to 1 : 1.65.

**Revendications**

1. Sulfonamides, leurs mélanges et leurs solutions, sulfonamides qui répondent à la formule générale III

$$R^1\text{-}SO_2\text{-}\underset{\displaystyle R^5}{N}\text{-}\left[CH_2\text{-}(OCH_2\text{-}\underset{\displaystyle R^3}{CH})_n\text{-}O\right]_q\text{-}R^6 \qquad (III)$$

dans laquelle
$R^1$ représente un radical phényle éventuellement substitué,
$R^3$ représente l'hydrogène ou un radical alkyle,
$R^5$ représente l'hydrogène, un alkyle, un hydroxyméthyle ou un radical de formule IV

$$-\left[CH_2\text{-}(OCH_2\text{-}\underset{\displaystyle R^3}{CH})_n\text{-}O\right]_q\text{-}R^6 \qquad (IV)$$

de formule V

$$R^1\text{-}SO_2\text{-}\overset{\displaystyle |\atop\displaystyle CH_2\atop\displaystyle |}{N}\text{-}\left[CH_2\text{-}(OCH_2\text{-}\underset{\displaystyle R^3}{CH})_n\text{-}O\right]_q\text{-}R^6 \qquad (V)$$

de formule VI

$$R^1\text{-}SO_2\text{-}\overset{\displaystyle O\text{-}CH_2\text{-}\atop\displaystyle CH_2}{N}\text{-}\left[CH_2\text{-}(OCH_2\text{-}\underset{\displaystyle R^3}{CH})_n\text{-}O\right]_q\text{-}R^6 \qquad (VI)$$

ou de formule VII

$$-CH_2\text{-}\underset{\displaystyle R^5}{N}\text{-}SO_2\text{-}R^1 \qquad (VII)$$

$R^6$ représente l'hydrogène, un alkyle ou un radical de formule VII,
n désigne un nombre de 2 à 19 et
q est égal à 1, à 2 ou à 3.

2. Sulfonamides, leurs mélanges ou leurs solutions dans des diols ou des mono-éthers de diols de formule II, qui peuvent être préparés par condensation de sulfonamides répondant à la formule I

$$R^1\text{-}SO_2\text{-}NH_{2\text{-}m\text{-}p}R^2{}_m(\text{-}CH_2OH)_p \qquad (I)$$

dans laquelle
$R^1$ représente un noyau phényle éventuellement substitué,
$R^2$ représente un radical alkyle,
m est égal à 0 ou à 1,
p est égal à 0, à 1 ou à 2 et
$0 \leqslant (m+p) \leqslant 2$, avec le formaldéhyde et des diols ou des mono-éthers de diols répondant à la formule II

$$H(OCH_2\text{-}\underset{\displaystyle R^3}{CH})_n\text{-}OR^4 \qquad (II)$$

dans laquelle
$R^3$ représente l'hydrogène ou un alkyle,
$R^4$ représente l'hydrogène ou un alkyle et
n désigne un nombre de 2 à 19, dans un rapport molaire sulfonamide : formaldéhyde : diol ou diol mono-éther de diol de 1 : (1-p) : 0,5 to 1 : (4-p) : 6.

3. Sulfonamides selon l'une des revendications 1 et 2, caractérisés en ce que
$R^1$ représente un noyau phényl non substitué ou porteur de 1 à 3 radicaux alkyles contenant au total au plus 12 atomes de carbone, de préférence au total au plus 4 atomes de carbone, ou porteur d'un autre radical aryle, plus spécialement d'un radical phényle,
$R^2$ représente un radical alkyle contenant de 1 à 4 atomes de carbone,
$R^3$ représente un radical alkyle contenant de 1 à 4 atomes de carbone et
$R^4$ ou $R^6$ représente un radical alkyle contenant de 1 à 18 atomes de carbone et est un alkyle $R^5$ identique à $R^2$

4. Sulfonamides selon l'une quelconque des revendications 1 à 3, caractérisés en ce que $R^4$ ou $R^6$ est un radical alkyle contenant de 1 à 4 atomes de carbone.

5. Sulfonamides selon l'une quelconque des revendications 1 à 4, caractérisés en ce que n désigne un nombre de 2 à 4 et/ou q désigne le nombre 1.

6. Procédé de préparation des sulfonamides définis dans les revendications 1 à 5, de leurs mélanges ou de leurs solutions dans des diols ou des monoéthers de diols de formule II, procédé caractérisé en ce qu'on condense des sulfonamides répondant à la formule I

$$R^1\text{-}SO_2\text{-}NH_{2\text{-}m\text{-}p}R^2{}_m(\text{-}CH_2OH)_p \qquad (I)$$

dans laquelle
$R^1$ représente un noyau phényle éventuellement substitué,
$R^2$ représente un radical alkyle,
m est égal à 0 ou à 1,
p est égal à 0, à 1 ou à 2 et
$0 \leqslant (m+p) \leqslant 2$, avec le formaldéhyde et des diols ou des mono-éthers de diols répondant à la formule II

$$H(OCH_2\text{-}\underset{\displaystyle R^3}{CH})_n\text{-}OR^4 \qquad (II)$$

dans laquelle
$R^3$ représente l'hydrogène ou un alkyle,
$R^4$ représente l'hydrogène ou un alkyle et
n désigne un nombre de 2 à 19, dans un rapport molaire sulfonamide : formaldéhyde : diol ou monoéther de diol 1 : (1-p) : 0,5 to 1 : (4-p) : 6, en présence d'un catalyseur d'enlèvement d'eau, à des températures de 80 à 250°C, éventuellement en présence d'un solvant organique inerte.

7. Procédé selon la revendication 6, caractérisé en ce qu'on utilise, comme catalyseur d'enlèvement

d'eau, un acide minéral ou un acide organique fort, plus particulièrement l'acide sulfamique, ou un sel à réaction acide, et on condense à une température de 100 à 200°C.

8. Procédé selon l'une des revendications 6 et 7, caractérisé en ce qu'on utilise le formaldéhyde sous la forme d'une solution aqueuse à au moins 30% en poids ou sous la forme de paraformaldéhyde.

9. Application des sulfonamides selon les revendications 1 à 5, comme agents modificateurs pour des résines de mélamine.

10. Application des sulfonamides selon les revendications 1 à 5 comme agents modificateurs pour des résines de mélamine ayant un rapport molaire mélamine : formaldéhyde compris entre 1 : 1,14 et 1 : 1,65